(19)

Europäisches
Patentamt

European
Patent Office

Office européen
des brevets

(11)     **EP 2 482 433 A2**

(12)                 **EUROPEAN PATENT APPLICATION**

(43) Date of publication:
**01.08.2012 Bulletin 2012/31**

(51) Int Cl.:
**H02M 1/08** (2006.01)          **H02M 3/156** (2006.01)
**H02M 3/155** (2006.01)

(21) Application number: **11306557.7**

(22) Date of filing: **24.11.2011**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br><br>(30) Priority: **04.04.2011  US 201113471542**<br>             **27.01.2011  EP 11368001**<br><br>(71) Applicant: **ST-Ericsson SA**<br>**1228 Plan-les-Ouates (CH)** | (72) Inventors:<br>• **Michal, Vratislav**<br>  **38100 GRENOBLE (FR)**<br>• **Premont, Christophe**<br>  **38360 SASSENAGE (FR)**<br>• **Pillonnet, Gael**<br>  **69005 LYON (FR)**<br><br>(74) Representative: **Hirsch & Associés**<br>**58, avenue Marceau**<br>**75008 Paris (FR)** |

(54)    **Switched DC/DC boost power stage with linear control-to-output conversion ratio, based on a ramp-modulated PWM generator**

(57)    Ramp-modulated pulse width modulation generator (100) comprising:

- an output stage (110) generating a ramp-modulated voltage ($V_D$);
- a control input (130) providing a variable multi-slope ramp voltage ($V_C$);
- a reference input (120) providing a constant voltage ($V_b$);
- a comparator (140) connected to the control input and the reference input, the comparator comparing the voltage $V_C$ of the control input with the voltage $V_b$ of the reference input to determine a duty-cycle ratio of the ramp-modulated voltage $V_D$ generated as a result of the comparison.

FIG. 4

EP 2 482 433 A2

**Description**

**Technical field**

The invention relates to the field of electronics and more particularly to a process for obtaining a linear static control-to-output characteristic of a boost-converter power stage.

**Background** Art

The conventional realization of the BOOST switched-mode power stage suffers from significant nonlinearity of the control-to-output transfer function, as discussed in [1, 2]. The nonlinearity is manifested namely by the significant variation of the static conversion gain $G_c$. As a result, specific non-linear control schemes are frequently used for booth open or closed loop converters' design.

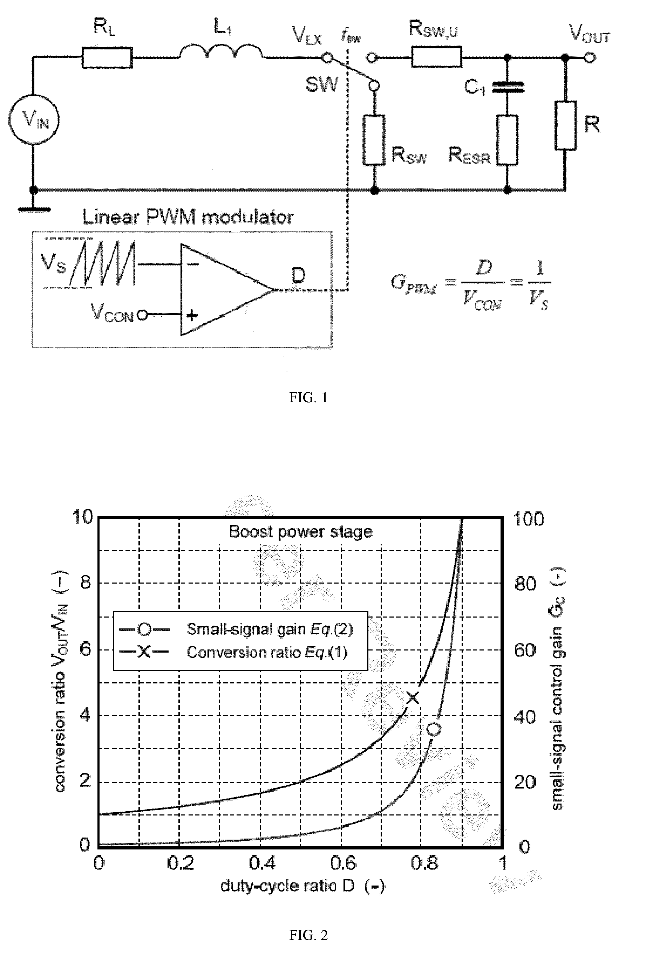

The basic scheme of a boost converter power stage is shown in Fig. 1. It consists of a voltage source $V_{IN}$, a switch SW including parasitic resistances $R_{SW}$, an LC filter with parasitic elements $R_L$ and $R_{ESR}$, a load resistance R, and a conventional pulse-width modulator (PWM) generator. In Continuous Conduction Mode (CCM), the static input-to-output conversion ratio $V_{OUT}/V_{IN}$ for the ideal converter ($R_L = R_{ESR} = 0$) is usually determined from equal positive and negative inductor current increments $\Delta_{L1,ON} = \Delta_{L1,OFF}$ occurring during the ON and OFF switching phases [1, 2, 3] as:

$$\frac{V_{OUT}}{V_{IN}} = \frac{1}{1-D+\dfrac{R_L}{R(1-D)}} = \left|R_{ind} = 0\right| = \frac{1}{1-D} \qquad (1)$$

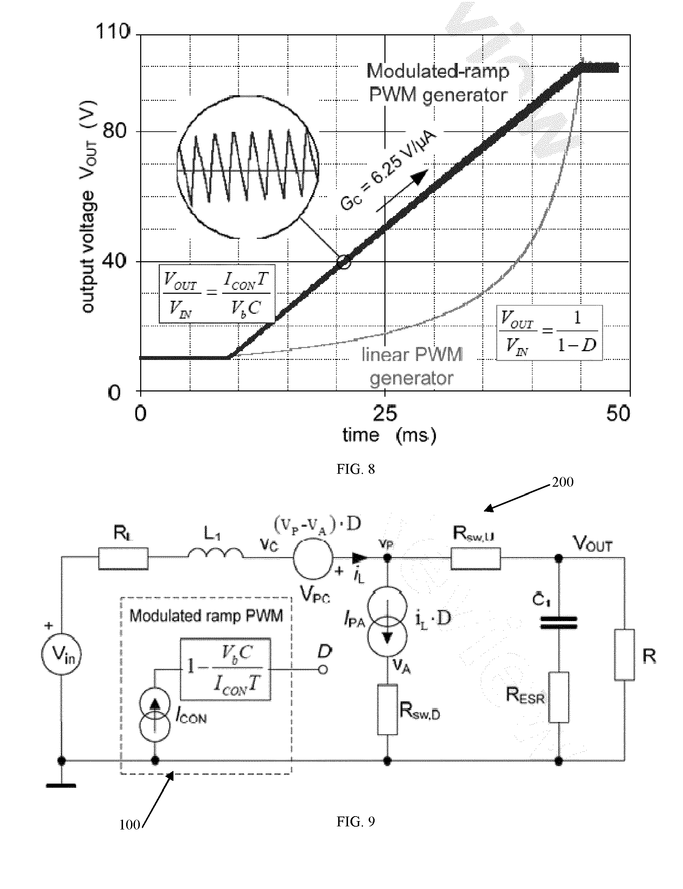

where D is the duty-cycle ratio and $R_L$ is the coil parasitic serial resistance. This characteristic can be demonstrated for ideal power stage ($R_L = 0$) and real power stage by the conversion characteristics as shown by the Fig. 9. Fig. 9 shows that an inflexion point occurs causing inversion of the conversion gain polarity. This phenomenon requires to employ special design techniques to limits the inductor current at the high duty-cycle values, which increase the circuit complexity.

The conversion gain or small-signal control gain $G_C$ relating to the incremental gain at the operating point (steady-state output voltage) can be expressed from the (1) by the partial derivative ($R_L = 0$):

$$G_C = \left.\frac{\partial V_{OUT}}{\partial D}\right|_{V_{IN}=const} = \frac{V_{IN}}{(1-D)^2} \qquad (2)$$

This expression is highly non-linear as $G_C$ is a function in $\dfrac{1}{(1-X)^2}$.

Referring now to Fig. 2, the usual duty-cycle range ($D < 0.9$) causes high variation of the small-signal control gain GC, even up to 40dB. This means that an incremental $\Delta D$ at high duty cycle ratio will cause significantly higher (up to 100-times) variation of $V_{OUT}$, compared to the identical increment $\Delta D$ applied at low duty-cycle ratio. In the open loop architecture, this nonlinearity decreases the conversion ratio accuracy (1) due to increased sensitivity, whereas in the closed loop architecture, it can affect the stability of the converter. In addition, another nonlinearity caused by the non-ideal components is encountered in the analysis of the converter.

The conventional solution usually limits the device performances, such as the switching frequency. Moreover, the high accuracy is not required in all applications, which favorite the open-loop architecture (e.g. power-supply of an RF-PA). However, the accuracy of traditional solution following (1) is very inaccurate. On this account, the linear form of (1) can facilitate the control of the standard boost-converter power stage, namely in the open-loop architecture.

In the domain of the feedback control, a lot has been done to address the problem of nonlinear control to-output conversion. The closed-loop transfer function design in voltage control mode is usually based on the linearization around an operating point, or by using feedback linearization.

A more suitable way is the predistortion technique which allows linearization of the static conversion ratio control through the specific PWM modulator schemes. Basically, predistortion can either be applied to the control signal or to the voltage ramp. However, common problems of these techniques are the increased modulator complexity, and low accuracy of generated duty-cycle. An analysis of this technique reveals a high sensitivity to the power-supply voltage (PWM signal peak amplitude), and to the delay caused by the filtering of the PWM signal, where several clock periods are required to obtain properly filtered error signal.

Thus, existing solutions usually require complicate control schemes: indeed, these control schemes are either based on the predistortion or on the feedback control techniques, such as the current mode control. Generally, complicated solutions decrease the competitive advantages of the device. For instance, current mode control scheme require the switches current sensing, which is inaccurate on the high frequencies. On this account, the limited switching frequency does not allow to use the small (low-cost) output LC filter which is important for the device cost.

There is a need for a solution for obtaining a linear static control-to-output characteristic of a switched-mode DC to DC converter.

## Summary of the invention

An object of embodiments of the present invention is to alleviate at least partly the above mentioned drawbacks. More particularly, embodiments of the invention aim at improving the linearity of the control-to-output characteristic of a switched-mode DC to DC converter.

This is achieved with a ramp-modulated pulse width modulation (PWM) generator. The ramp-modulated pulse width modulation generator comprises an output stage generating a ramp-modulated voltage $V_D$, a control input providing a variable multi-slope ramp voltage $V_C$, a reference input providing a constant voltage $V_b$, a comparator connected to the control input and the reference input. The comparator compares the voltage $V_C$ of the control input with the voltage $V_b$ of the reference input to determine a duty-cycle ration of the ramp-modulated voltage $V_D$ generated as a result of the comparison.

That the PWM modulator is based on a variable current source connected on the non-inverted input (V+) of the comparator provides a variable ramp-voltage slope, which, for a fixed reference voltage connected on the inverted input (V-) of the comparator, allows to obtain a non linear behaviour of the PWM generator.

Embodiments of the invention offer many advantages, including the following:

- the non linear behaviour of the ramp-modulated PWM generator is usefull for preserving a non linear characteristic $V_{OUT}/V_{IN}$ of a circuit, e.g. switched-mode DC to DC converter circuit;
- the ramp-modulated PWM generator presents a natural duty cycle limitation by the maximal value of the control current generated by the control input, thus allowing to protect current value of electronic elements such as inductance.
- the ramp-modulated PWM generator facilitates the open-loop controlling of a circuit, e.g. switched-mode DC to DC converter circuit;
- the ramp-modulated PWM generator facilitates the construction of switched-mode DC to DC converter, while taking account of its nonlinear dynamic behaviour, in a voltage or current mode closed-loop control architecture;
- the ramp-modulated PWM generator enables very simple realisation in the CMOS manufacturing process, thus decreasing manufacturing costs.

This is also achieved with a switched-mode DC to DC converter converting an input voltage to an output voltage according to a signal control, wherein the switched-mode DC to DC converter comprises a ramp-modulated pulse width modulation generator for generating the signal control. The ramp-modulated pulse width modulation generator comprises an output stage generating a ramp-modulated voltage $V_D$, a control input providing a variable multi-slope ramp voltage $V_C$, a reference input providing a constant voltage $V_b$, a comparator connected to the control input and the reference input. The comparator compares the voltage $V_C$ of the control input with the voltage $V_b$ of the reference input to determine a duty-cycle ration of the ramp-modulated voltage $V_D$ generated as a result of the comparison.

This is also achieved with an integrated circuit that comprises the ramp-modulated pulse width modulation generator according to the invention.

This is also achieved with an integrated circuit comprising the switched-mode DC-to-DC converter according to the invention.

## Brief description of the drawings

Other features of one or more embodiments of the invention will best understood by reference to the following detailed description when read in conjunction with the accompanying drawings.

Fig. 1 shows a block diagram illustrating an exemplary a boost converter power stage.

Fig. 2 shows an example of the conversion ratio $V_{OUT}/V_{IN}$ and small-signal control gain $G_C$ of the ideal boost converter for $V_{IN} = 1$.

Fig. 3 illustrates a linear PWM modulator composed of a constant current source $I_b$, periodically discharged capacitor and comparator.

Fig. 4 illustrates a current-modulated ramp PWM generator according to the invention, wherein the current $I_{CON}$ is the input control variable and the voltage $V_b$ is the constant bias voltage.

Fig. 5 illustrates the voltage $V_C(t)$ of the capacitor illustrated in Fig. 4 for two different values of $I_{CON1}$ and $I_{CON2}$, $I_{CON1}$ and $I_{CON2}$ being considered constant within the clock period.

Fig. 6 shows a table the conversion ratio $V_{OUT}/V_{IN}$ and controle gain $G_C$ of power stage operating in Continuous Conduction Mode.

Fig. 7 illustrates a simulation bench of a BOOST power stage with a linear PWM modulator (Fig. 3) and a current-modulated ramp PWM generator (Fig. 4).

Fig. 8 illustrates the result of the switched simulation on the ideal BOOST power stage with linear (Fig.2) and ramp-modulated (Fig.3) PWM generator.

Fig. 9 shows an example of linear model of a boost converter power stage according to the invention, wherein $V_{PC}$ and $I_{PA}$ form a DC transformer, and wherein $V_{in} = 10V$, $L_1 = 5\mu H$, $C_1 = 22\mu F$, $R_L = 150m\Omega$, $R_{ESR} = 20m\Omega$, R = $100\Omega$ $Vb = 0.5V$, C = 1pF, $T = 0.3125\mu s$ ($\alpha = 1.6pA$), $R_{swU,D} = 0$.

Fig. 10 illustrates a comparison of averaged output voltages for ideal and real BOOST converter power stage, including $R_L$ = 150 m$\Omega$ and $R_L$ = 100 $\Omega$ with inflexion point around D = 0.9.

Fig. 11 illustrates a comparison of averaged output voltages of ideal and real BOOST converter power stage with modulated-ramp PWM generator ($V_{IN}$= 10V $V_b$ = 0.5V, $R_L$ = 150 m$\Omega$, R= 100 $\Omega$, C = 1 pF, T = 0.3125$\mu$s or $\alpha$ = 1.6$\mu$A).

FIG. 12 illustrates a single ended current source based on a CCII+ current conveyor circuit.

FIG. 13 illustrates an inverting modulated-ramp PWM generator, wherein the generated ramp is available on the operation amplifier output.

FIG. 14 exemplifies a behavioral model of a current-output derivative-filtered PID controller with current-controlled current source.

FIG. 15 illustrates an active equivalent of FIG. 13 current-output PID controller, wherein the parameters are $R_3$ = 462k$\Omega$, $C_3$ = 185pF, $R_2$ = 9.3k$\Omega$ $C_2$ = 45pF, $R_H$ = 19 k$\Omega$, R = 1 k$\Omega$.

Fig. 16 shows the comparison between a measured steady-state output voltage and conversion ration $V_{OUT}/V_{IN}$ of a boost converter with modulated-ramp PWM generator, with an ideal characteristic of the equation (5) (with the parameter $V_{IN}$ = 5V, $f_{SW}$ = 500kHz, C = 71pF, $L$ = 10$\mu$H, $C1$ = 22$\mu$F, $R$ = 120$\Omega$).

Fig. 17 shows examples of measured waveforms of a modulated-ramp PWM generator and power stage with a conversion ratio 6.5, the ramp-linearity error in the range of interest (0-500mV) being < 1%.

## Detailed description of embodiments of the invention

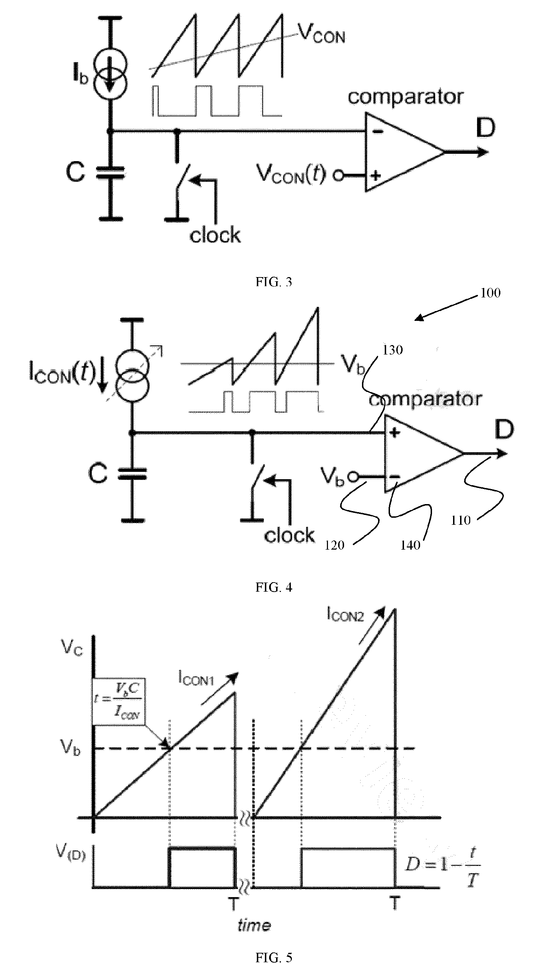

It is referred to Fig. 3 that illustrates a conventional linear PWM generator that consists of a constant ramp signal, a comparator, and a control input $V_{CON}$. The constant ramp is obtained by the help of a DC bias current $I_b$ injected to the periodically discharged capacitor C. This configuration yields a constant control-voltage-to-duty-cycle gain of

$\dfrac{1}{V_m}$ ($V_m$ is the voltage ramp amplitude and is further considered unitary). Hence, the final control-to-output characteristic $V_{OUT}/V_{IN}$ and DC control gain $G_C$, given by equations (1) and (2) of the converter remain nonlinear.

Referring now to Fig. 4, it is illustrated a ramp-modulated pulse width modulation generator (100) according to the invention. The ramp-modulated PWM generator comprises an output stage (110) generating a ramp-modulated voltage $V_D$. The ramp-modulated PWM generator further comprises a control input (130) providing a variable multi-slope ramp voltage $V_C$, and a reference input (120) providing a constant voltage $V_b$.

The permutation of the control and reference inputs ($I_b$ and $V_{CON}$) in the traditional modulator scheme, as the one illustrated on Fig. 3, results in the suitable nonlinear gain of the modulator. In the ramp-modulated PWM generator shown in Fig. 4 the input variable is the control current $I_{CON}$ whereas the comparator (140) input voltage $V_b$ remains constant.

Hence, the comparator (140) of the ramp-modulated PWM generator is connected to the control input and the reference input, and the comparator compares the voltage $V_C$ of the control input with the voltage $V_b$ of the reference input to determine a duty-cycle D ration of the ramp-modulated voltage $V_D$ generated as a result of the comparison. It is to be understood that the control input is connected to the positive (+) input of the comparator, and the reference input is connected to the negative input (-) of the connector. Thus, $V_D$ is generated as a result of the comparison, which means that:

- if $V_C > V_b$ , then $V_D$ is hig (e.g. $V_D > 0$); and
- if Vc < $V_b$ , then $V_D$ is low (e.g. $V_D = 0$)

The duty of cycle is the ratio of the duration of an event to a total period, and a common notation of a duty of cycle $D$ is $D = \tau/T$ where $\tau$ is the duration that the function is active and T is the period of the function.

Referring back to ramp-modulated PWM generator illustrated on Fig. 4, the variable current $I_{CON}$ can be generated by a controlled source (e.g. VCCS). The modulator control-to-duty-cycle gain can be determined by examine the capacitor voltage $V_C$ (t). This voltage $V_C$ (t) is a linear time function of $I_{CON}$, when considering, for convenience, the control current $I_{CON}$ constant during one clock period T:

$$V_C(t) = \frac{1}{C}\int I_{CON}(t)dt \approx \frac{I_{CON}}{C}t \qquad (3)$$

As shown in Fig. 4, capacitor voltage is compared with an arbitrary reference voltage $V_b$. In the case that $V_C$ < $V_b$, the output $V_D$ of the PWM modulator is low. $V_C$ reaches the value $V_b$ in $t = \dfrac{V_b \cdot C}{I_{CON}}$ pulling-up the output of the modulator, that is, at which time $t$ at which time the output of the modulator goes high. Considering the capacitor being discharged with period T, the duty-cycle ration D can be then expressed as:

$$D = 1 - \frac{V_b C}{I_{CON}T} = 1 - \frac{\alpha}{I_{CON}} \qquad (4)$$

and is defined for $I_{CON(min)} > V_b \cdot C/T$.

Referring now to Fig. 5, an example of the capacitor voltage $V_C$ (t) is plotted. Here, the slope of $V_C$ varies with the control current values $I_{CON1}$ and $I_{CON2}$: indeed, as shown in the equation (3), $V_C$ is a linear function of control current $I_{CON}$ so that the increase (or decrease) of $V_C$ depends on the increase (or decrease) of $I_{CON}$.

Moreover, for $V_C = V_b$ which occurs at the time $t = \dfrac{V_b \cdot C}{I_{CON}}$ , the output stage of the ramp-modulated PWM generator generates a ramp-modulated voltage $V_D$, as shown on Figure 5.

Hence, the proposed ramp-modulated PWM generator yields a ramp-modulated voltage $V_D$ with a duty-cycle ration which depends on a control input providing a variable multi-slope ramp voltage $V_C$. As follow from equation (4), the duty-cycle ration may further be controlled by the reference input which typically provide a constant voltage $V_b$.

In practice, the variable multi-slope ramp voltage $V_C$ provided by the control input is generated by a variable current $I_{CON}$ injected in a capacitor C periodically discharged. This is exemplified on Figure 4 depicting a variable currant source $I_{CON}$ which is connected in series with a capacitor C, the capacitor C being periodically discharged through a closed toggled switch.

The control current $I_{CON}$ can be obtained directly from a control voltage $V_{CON}$ by a large value series resistance. This amounts to say that a RC integrator is created. This is typically used for very low $V_b$.

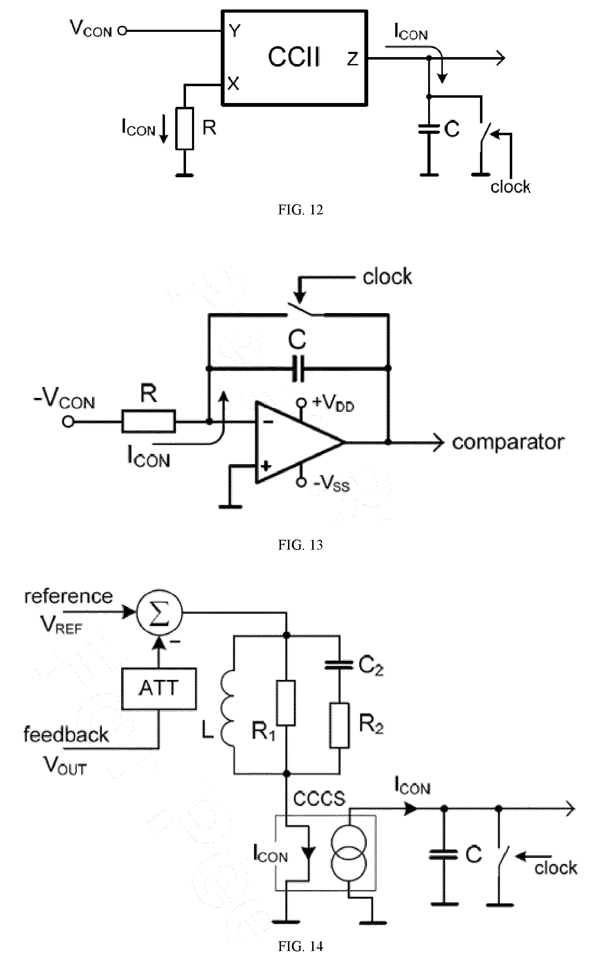

In another embodiment, for higher values of $V_b$, an active current source may be used, in order to achieve linear conversion $V_{CON} \rightarrow I_{CON}$. This may be achieved, for instance, with non-inverting Howland current source or a current conveyor (CCII+) based circuit as the one depicted on FIG. 12.

In another embodiment, the conversion transconductance is simply given by $I_{CON} = V_{CON}/R$. An example of the circuit providing the conversion is shown in FIG. 12,. The variable current $I_{CON}$ is therefore obtained from a conversion of a control voltage $V_{CON}$ by using a CCII+ current conveyor circuit. In this scheme, the control voltage $V_{CON}$ is applied at the input node X of the CCII+ circuit, the resistance R is connected to the input node Y of the CCII+ circuit, and the output Z of the of the CCII+ circuit provides the variable current $I_{CON}$.

In another embodiment, a very simple realization can be achieved by using the inverting integrator shown in FIG. 13. Except for the inversion property of this circuit (inverted $V_{CON}$), the benefit from the low output impedance of the output node is that it allows the elimination of parasitic load capacitance.

In another embodiment, in this closed-loop control scheme, the current $I_{CON}$ is generated directly by a controller with the current output terminal. For example, the active current-output derivative-filtered PID controller is shown in FIG. 14, based on a grounded RLC circuit. The grounded inductor $L$ forms the integrator, $R_1$ is related to the proportional gain and $R_2C_2$ to the filtered derivative component of the controller transfer function.

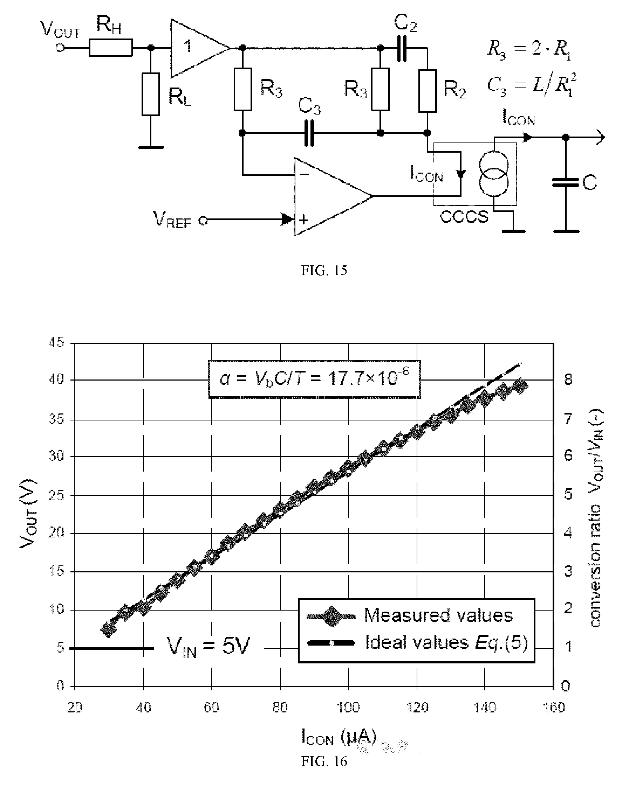

In another embodiment, an inductorless circuit equivalent to FIG. 14 can be obtained by topological transformation. One realization of the active circuit based on an operational amplifier is shown in FIG. 15, where the loss grounded inductor is realized by $R_3C_3$ and operational amplifier, $R_2C_2$ corresponds approximately to the derivative branch of FIG. 14 circuit (with identical values), and voltage divider $R_H$ and $R_L$ steps down the output voltage to the reference voltage level. The set of values shown in FIG. 15 ($L = 9.85H$, $R_1 = 231k\Omega$, $R_2 = 9.3k\Omega$, $C_2 = 45pF$) are computed to stabilize a converter model as shown on Fig. 8 (discussed later) with reference gain $V_{OUT}/V_{REF} = 20$. The operational amplifier output current may be measured by sensing the bias current.

As discussed previously, the control input provides a variable multi-slope ramp voltage $V_C$ which is used by the comparator for generating a ramp-modulated voltage $V_D$. It is to be understood that the variable multi-slope ramp voltage $V_C$ generated by the control input may be, but not limited to, a saw-tooth wave ramp or a triangular wave ramp. It should be noted that most of today's PWM generators use the triangular wave generated PWM rather than a saw-tooth wave ramp. Advantageously, the triangular wave avoids excessive current during the discharging of the integrating capacitor.

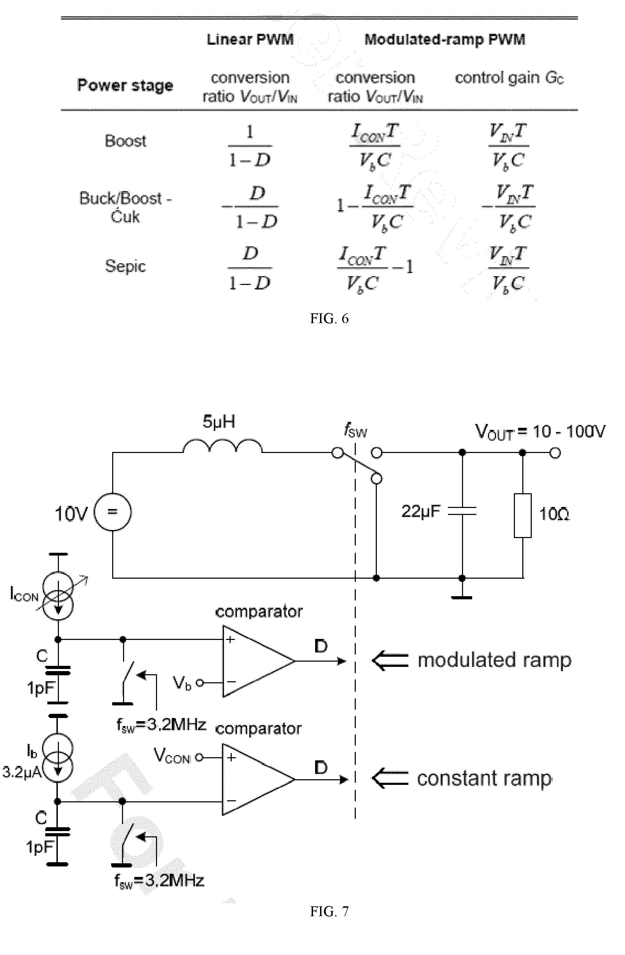

Referring now to Fig. 7, it is now discussed a switched-mode direct current to direct current (DC to DC) converter converting an input voltage to an output voltage according to a signal control. The signal control is generated by the ramp-modulated pulse width modulation generator discussed above. Namely, the ramp-modulated PWM controller comprises an output stage generating a ramp-modulated voltage $V_D$, a control input providing a variable multi-slope ramp voltage $V_C$, a reference input providing a constant voltage $V_b$, and a comparator connected to the control input and the reference input, the comparator comparing the voltage $V_C$ with the voltage $V_b$ to determine a duty-cycle ration of the voltage $V_D$ generated as a result of the comparison.

The switched-mode DC-to-DC converter depicted in Fig. 7 is a conventional boost converter power stage similar to the one discussed in Fig. 1, except that the switch is controlled by a signal control, the ramp-modulated voltage $V_D$, generated by the ramp-modulated pulse width modulation generator instead of a conventional linear PWM modulator as the one depicted on Fig. 1.

The switched-mode DC-to-DC converter depicted in Fig. 7 obeys the equations discussed in relation with the converter of Fig. 1. Especially, the static input-to-output conversion ratio $V_{OUT}/V_{IN}$ for the ideal converter ($R_L = R_{ESR} = 0$) is determined by the equation (1):

$$\frac{V_{OUT}}{V_{IN}} = \frac{1}{1-D+\dfrac{R_L}{R(1-D)}} = \left| R_{ind} = 0 \right| = \frac{1}{1-D}$$

The duty cycle value D in the conversion ratio formula (1) of the BOOST converter can be substituted by the new duty cycle value (4) of the ramp-modulated PWM generator depicted in Fig. 4, advantageously resulting in a linear relationship $V_{OUT}/V_{IN}$:

$$\frac{V_{OUT}}{V_{IN}} = \frac{I_{CON}T}{V_b C} \qquad\qquad (5)$$

In addition, the conversion gain of this linearised scheme is then done by the partial derivative:

$$G_C = \left.\frac{\partial V_{OUT}}{\partial I_{CON}}\right|_{V_{IN}=const} = \frac{T}{V_b C} \qquad (6)$$

and is advantageously constant for all values $I_{CON} > I_{CON}(min)$. This means that, contrary to the conversion gain or small-signal control gain $G_C$ of conventional PWM generator which no linear as shown in the equation (2), an arbitrarily small step $\Delta I_{CON}$ causes an identical step $\Delta V_{OUT}$, independent on the steady-state output voltage. Similar to the boost-converter power stage, conversion characteristics and small-signal control gain for other mentioned converters can be obtained. It is to be understood that the proposed ramp-modulated PWM generator can be adapted to several types of switched-mode DC-to-DC converter so that their conversion gain of similarly linearised. Especially, as shown on Fig. 6, the boost, buck/boost, Ćuk, and SEPIC DC/DC converters with modulated-ramp PWM generator exhibit linear $V_{OUT}/V_{IN}$ conversion ratio characteristic and a constant control gain $G_C$. Otherwise said, a switched-mode DC-to-DC converte comprising a ramp-modulated PWM generator according to the invention, may be, but not limited to, a Boost converter, a Buck-Boost converter, a Ćuk converter, or a Sepic converter.

Moreover, one can notice the lower relative sensitivity of the conversion ratio compared to original value. This is advantageously suitable for the improvements of the control accuracy namely at high duty-cycle values.

In reference now to Fig. 8, the linearization of the static conversion characteristic is shown by the slow (i.e. quasi-static) switched transient simulation of an ideal boost converter power stage; the constant conversion ratio is demonstrated by the switched transient simulation on the ideal BOOST power stage. The simulation bench is shown in Fig. 7. In this model, the excitation is done by the 40ms voltage ramp (linear PWM) and 40ms current ramp (modulated ramp PWM). More precisely, the excitations (control values $V_{CON}$ and $I_{CON}$) are realised: i) for the linear PWM generator by a 40ms voltage ramp from 0 to 1V, and ii) for the modulated ramp PWM by a 40ms current ramp from 1.6μA to 16μA. The resulting characteristics (the time responses) are shown in Fig. 8, where the linear control to output conversion ratio for modulated ramp PWM generator can be observed.

Referring now to Fig. 9, it is discussed the parasitic elements in the circuit (mainly the inductor's series resistance RL as shown and discussed in reference to Fig. 1) introduce extra higher-order terms in the transfer characteristics. Indeed, the boost power converter with modulated-ramp PWM generator exhibits constant $V_{OUT}/V_{IN}$ conversion gain. However, due consideration for these parasitics is important for the proper design of the system. For the sake of explanation, the comparison of non-ideal boost converter DC and AC characteristics is provided between the conventional linear (Fig. 3) and modulated-ramp PWM generators (Fig. 4).

The model of the boost DC/DC converter (200) shown in Fig. 9 is based on state space averaging concept: here, the dependent sources $V_{PC}$ and $I_{PA}$ represent the average voltage and current of the switch terminals, variable D is the duty-cycle, and the rectangle representing the equation (4) embodies the proposed modulated ramp PWM generator. The switches' resistance $R_{sw,D}$ in Fig. 9 is shown for convenience and is not considered in the following. The accuracy of AC simulation with the averaged model decreases at frequencies approaching the switching frequency. This is to be considered in the evaluation of the following AC characteristics, where the switching frequency is not specified.

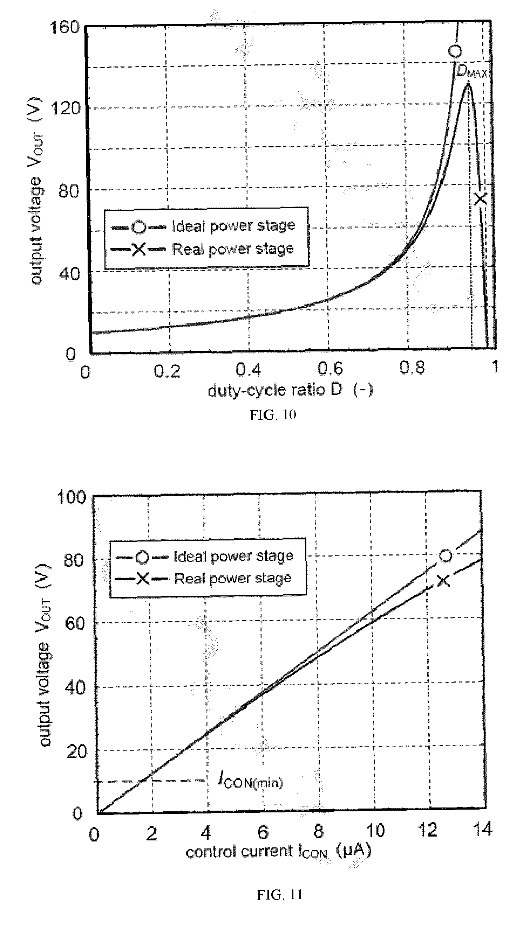

The steady-state analysis of circuit model of Fig. 9 leads to an improvement in the accuracy of $V_{OUT}/V_{IN}$ conversion gain given by the equation (5). Focussing now on the higher order terms which cause the spurious drop of $V_{OUT}$ towards zero at high duty-cycle, as show in Fig. 10: beyond the excessive increase of the inductor and switch currents, the high duty cycle value $D_{MAX}$ causes the inversion of the control gain polarity, which can affect the stability of the converter operating in closed-loop. In general, a positive control gain $G_C$ is usually maintained by employing an advanced control technique, such as current-mode control. In such technique, the inductor current $I_L$ is measured and limited to a certain value (below $D_{MAX}$) by an additional current-sensing circuit. However, an accurate current sensing circuit may be difficult to integrate at high switching frequencies, which limits the maximum switching frequency of the converter. Compared to linear PWM schemes as exemplified Fig. 3, the proposed modulated-ramp PWM generator shown in Fig. 4 allows to maintain a positive small-signal control gain $G_C$, and limits the maximal current $I_L$ by the natural limitation of the duty-cycle, via the maximal value of $I_{CON}$.

The $V_{OUT}/V_{IN}$ conversion ratio of a boost converter power stage with linear PWM modulator containing parasitic resistance $R_L$ can be derived from Fig. 9 model as:

$$\frac{V_{OUT}}{V_{IN}} = \frac{1}{1-D+\dfrac{R_L}{R(1-D)}} \qquad (7)$$

which, for the ideal case ($R_L \to 0$) converges to $\dfrac{V_{OUT}}{V_{IN}} = \dfrac{1}{1-D}$. An example of the conversion characteristic (1) for real ($R_L > 0$) and ideal ($R_L = 0$) power stages are shown in Fig. 10: the mentioned point $D_{MAX}$ ($\dfrac{dV_{OUT}}{dD}$) where the

control gain $G_C$ changes the polarity.

In comparison, the boost converter power stage with modulated-ramp PWM generator can be described by the static conversion ratio:

$$V_{OUT} = \frac{V_{IN}}{\alpha + \dfrac{R_L}{\alpha R}I^2_{CON}}I_{CON} \qquad (8)$$

For low control current values, this approximates a linear function of $I_{CON}$ as shown on Fig. 11: the maximum allowed control current $I_{CON(MAX)}$ which corresponds to the value where the PWM generator produces the duty-cycle value $D_{MAX}$ results from (8) as:

$$I_{CON(MAX)} = \sqrt{\frac{R}{R_L}} \cdot \frac{V_b C}{T} = \alpha \sqrt{\frac{R}{R_L}} \qquad (9)$$

Referring to Fig. 11, an illustration of the above equation (9), it is now referred to a power stage with the following parameters: $V_{in} = 10V$, $L_1 = 5\mu H$, $C_1 = 22\mu F$, $R_L = 150m\Omega$, $R_{ESR} = 20m\Omega$, R = $100\Omega$ $Vb = 0.5V$, C = 1pF, T = $0.3125\mu s$

($\alpha = 1.6\mu A$), $R_{swU,D} = 0$. This power stage exhibits the point $\dfrac{dV_{OUT}}{dD} = 0$ at $I_{CON(MAX)} = 41$ pA. As shown in Fig. 11, this point is far from the considered dynamics of $I_{CON}$, being between $1.6\mu A$ and $14\mu A$ (conversion ratio $V_{OUT}/V_{IN}$ from 1 to 8).

Thus, and advantageously, the modulated-ramp PWM generator presents a natural duty cycle limitation by the maximal value of the control current $I_{MAX}$ and smooths the inflexion point, protecting the inductor current value. Regarding a safe choice of maximal control current value $I_{MAX}$, (the maximal available control current $I_{CON(MAX)}$), the averaged inductor current is revealed in the following expression (see Fig. 11):

$$I_L = \frac{V_{OUT}}{R_L(1-D)}$$

and the maximal inductor current is then limited to:

$$I_{L\max} = \frac{V_{OUT}}{R(1 - D_{MAX})} = \frac{V_{OUT}I_{max}}{\alpha R} \qquad (10)$$

Still referring to Fig. 11, the effect on the static conversion characteristic is shown, obtained by the averaged model of the power stage. One can observe, that for the conversion ratio up to 8, the inflexion point is far to occurs.

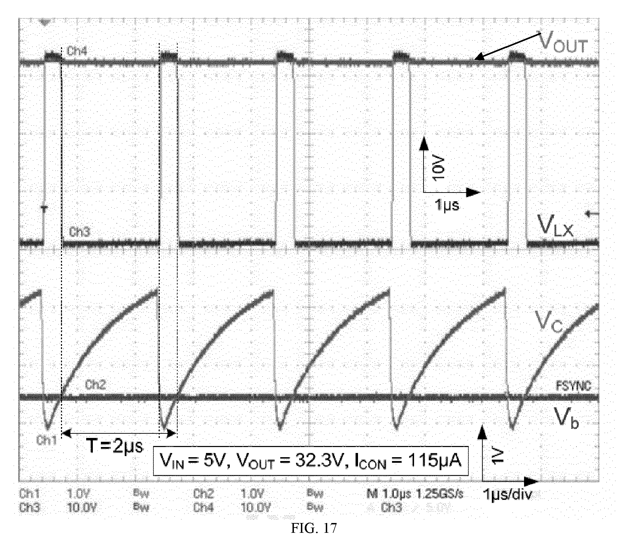

Referring now to Figs. 16 and 17, practical benefits from the use of the modulated-ramp PWM generator are shows by measurement of a boost converter power stage. In these measurements, the PWM modulator uses the scheme from Fig. 7 with C = 71 pF (including parasitic capacitances), and clock frequency fsw = 500kHz. The power stage is built using an N-channel power MOSFET transistor with low $R_{DSON}$ < 100mΩ and a Schottky diode rectifier. The 0.5V bias voltage $V_b$ results in $\alpha = V_bC/T$ = 17.7x10-6 (6), which gives a control current range of 30 - 150μA (conversion ratio from 1 to 8).

The comparison of measured output voltage and output voltage calculated per the equation (5) is shown in Fig. 16. One can notice the low nonlinear conversion ratio error corresponding to the equation (8), which is caused by the low parasitic resistance of L (23mΩ). The small slope error is caused by the accuracy of capacitor $C$, and can be compensated by the $V_b$.

In Fig. 17, an example of a captured waveform of a converter operating with conversion ratio $V_{OUT}/V_{IN}$ = 6.5 (e.g. with $V_{IN}$ = 5V and $V_{OUT}$ = 32V) is shown. Notably, one can observe the voltage ramp $V_c$, the bias voltage $V_b$, the switch voltage $V_{LX}$ and output voltage $V_{OUT}$. Here, the dynamics of current source $I_b$ is designed to provide high output impedance (high linearity) in the range 0 - $V_b$ (i.e 0 - 500mV). Above, the low supply voltage causes the ramp to be nonlinear, what however, has no more impact to the conversion accuracy.

The ramp-modulated pulse width modulation generator described may be implemented on an integrated circuit, e.g. using transistors such as, but not limited to, CMOS transistors or MTCMOS transistors, and the like. Similarly, the switched-mode DC-to-DC converter may be implemented on an integrated circuit, e.g. using transistors such as, but not limited to, CMOS transistors or MTCMOS transistors, and the like. It is to be understood that the ramp-modulated pulse width modulation generator and/or the switched-mode DC-to-DC converter may be implemented with various electronic components suitable to perform the functions. The electronic components may be thus packaged discretely, as arrays or networks of like components, or integrated inside of packages such as semiconductor integrated circuits or thick film devices.

**REFERENCES**

[1] B. Bryant, M. K. Kazimierczuk, Voltage loop of boost PWM DC-DC converters with peak current-mode control IEEE Transactions on Circuits and Systems I: Vol. 53 , Issue: 1 2006

[2] D. Liebal, P.Vijayraghavan, N.Sreenath, Control of DC-DC buck-boost converter using exact linearization techniques, IEEE Proc. of Power Electronics Specialists Conference PESC 1993.

[3] H. Sira-Ramirez, M. Rios-Bolivar, A.S.I. Zinober, Adaptive input-output linearization for PWM regulation of DC-to-DC power converters Proc. of the American Control Conference, 1995.

[4] Yu-Kang Lo, Shang-Chin Yen, Jan-Ming Wang, Linearization of the control-to-output transfer function for a PWM buck-boost converter Proc. IEEE International Symposium on Industrial Electronics, 2004 ,

[5] D. Liebal, P.Vijayraghavan, N.Sreenath, Control of DC-DC buck-boost converter using exact linearization techniques, IEEE Proc. of Power Electronics Specialists Conference PESC 1993.

[6] H. Sira-Ramirez, M. Rios-Bolivar, A.S.I. Zinober, Adaptive input-output linearization for PWM regulation of DC-to-DC power converters Proc. of the American Control Conference, 1995.

[7] Yu-Kang Lo, Shang-Chin Yen, Jan-Ming Wang, Linearization of the control-to-output transfer function for a PWM buck-boost converter Proc. IEEE International Symposium on Industrial Electronics, 2004.

**Claims**

1.  A ramp-modulated pulse width modulation generator (100) comprising:

- an output stage (110) generating a ramp-modulated voltage ($V_D$);
- a control input (130) providing a variable multi-slope ramp voltage ($V_C$);

- a reference input (120) providing a constant voltage ($V_b$);
- a comparator (140) connected to the control input and the reference input, the comparator comparing the voltage ($V_C$) of the control input with the voltage ($V_b$) of the reference input to determine a duty-cycle ration of the ramp-modulated voltage ($V_D$) generated as a result of the comparison.

2. The ramp-modulated pulse width modulation generator of claim 1, wherein the control input is generated by a variable current ($I_{CON}$) injected in a capacitor (C) periodically discharged.

3. The ramp-modulated pulse width modulation generator of claim 2, wherein the variable current ($I_{CON}$) is obtained from a control voltage ($V_{CON}$) by a large value series resistance.

4. The ramp-modulated pulse width modulation generator of claim 2, wherein the variable current ($I_{CON}$) is obtained from a conversion of a control voltage ($V_{CON}$) by using a CCII+ current conveyor circuit, the control voltage ($V_{CON}$) being applied at the input node X of the CCII+ circuit, a resistance R such that R= $V_{CON}$ / $I_{CON}$ being connected to the input node Y, and the output Z of the of the CCII+ circuit providing the variable current ($I_{CON}$).

5. The ramp-modulated pulse width modulation generator of claim 2, wherein the variable current ($I_{CON}$) is obtained from a non-inverting Howland current source.

6. The ramp-modulated pulse width modulation generator of one of claims 1 to 5, wherein the variable multi-slope ramp voltage $V_C$ generated by the control input is one among:

   - saw-tooth wave ramp;
   - triangular wave ramp.

7. A switched-mode DC to DC converter (200) converting an input voltage to an output voltage according to a signal control, wherein the switched-mode DC to DC converter comprises a ramp-modulated pulse width modulation generator (100) for generating the signal control, wherein the ramp-modulated pulse width modulation generator comprises:

   - an output stage (110) generating a ramp-modulated voltage ($V_D$);
   - a control input (120) providing a variable multi-slope ramp voltage ($V_C$);
   - a reference input (120) providing a constant voltage ($V_b$);
   - a comparator (140) connected to the control input and the reference input, the comparator comparing the voltage ($V_C$) of the control input with the voltage ($V_b$) of the reference input to determine a duty-cycle ration of the ramp-modulated voltage ($V_D$) generated as a result of the comparison.

8. The switched-mode DC to DC converter of claim 7, wherein the control input is generated by a variable current ($I_{CON}$) injected in a capacitor (C) periodically discharged.

9. The switched-mode DC to DC converter of claim 7 or 8, wherein the switched-mode DC-to-DC converter is one among:

   - a Boost converter;
   - a Buck-Boost converter;
   - a Ćuk converter; and
   - a Sepic converter.

10. The switched-mode DC-to-DC converter of one of claims 7 to 9, wherein the DC-to-DC converter is an open-loop DC-to-DC converter.

11. The switched-mode DC-to-DC converter of one of claims 7 to 9, wherein the DC-to-DC converter is a closed-loop DC-to-DC converter.

12. An integrated circuit comprising the ramp-modulated pulse width modulation generator according to one of claims 1 to 6.

13. An integrated circuit comprising the switched-mode DC-to-DC converter according to one of claims 7 to 11.

14. The integrated circuit of claim 12 or 13, wherein the integrated circuit is formed of one among:

- CMOS transistors; and
- MTCMOS transistors.

FIG. 1

$$G_{PWM} = \frac{D}{V_{CON}} = \frac{1}{V_S}$$

FIG. 2

FIG. 3

FIG. 4

FIG. 5

13

| Power stage | Linear PWM conversion ratio $V_{OUT}/V_{IN}$ | Modulated-ramp PWM conversion ratio $V_{OUT}/V_{IN}$ | control gain $G_C$ |
|---|---|---|---|
| Boost | $\dfrac{1}{1-D}$ | $\dfrac{I_{CON}T}{V_bC}$ | $\dfrac{V_{IN}T}{V_bC}$ |
| Buck/Boost - Ćuk | $-\dfrac{D}{1-D}$ | $1-\dfrac{I_{CON}T}{V_bC}$ | $-\dfrac{V_{IN}T}{V_bC}$ |
| Sepic | $\dfrac{D}{1-D}$ | $\dfrac{I_{CON}T}{V_bC}-1$ | $\dfrac{V_{IN}T}{V_bC}$ |

FIG. 6

FIG. 7

FIG. 8

FIG. 9

FIG. 10

FIG. 11

FIG. 12

FIG. 13

FIG. 14

FIG. 15

$$R_3 = 2 \cdot R_1$$
$$C_3 = L/R_1^2$$

$$\alpha = V_b C/T = 17.7 \times 10^{-6}$$

$V_{IN} = 5V$

Measured values

Ideal values $Eq.(5)$

$I_{CON}$ (μA)

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B. BRYANT ; M. K. KAZIMIERCZUK.** Voltage loop of boost PWM DC-DC converters with peak current-mode control. *IEEE Transactions on Circuits and Systems I,* 2006, vol. 53 (1
- **D. LIEBAL ; P.VIJAYRAGHAVAN ; N.SREENATH.** Control of DC-DC buck-boost converter using exact linearization techniques. *IEEE Proc. of Power Electronics Specialists Conference PESC,* 1993

- **H. SIRA-RAMIREZ ; M. RIOS-BOLIVAR ; A.S.I. ZINOBER.** Adaptive input-output linearization for PWM regulation of DC-to-DC power converters. *Proc. of the American Control Conference,* 1995
- **YU-KANG LO ; SHANG-CHIN YEN ; JAN-MING WANG.** Linearization of the control-to-output transfer function for a PWM buck-boost converter. *Proc. IEEE International Symposium on Industrial Electronics,* 2004